# FASCICULE DE BREVET EUROPEEN

(11) **EP 0 402 293 B1**
(45) Date de publication et mention de la délivrance du brevet: **02.03.1994**
(21) Numéro de dépôt: 90470016.8
(22) Date de dépôt: 09.04.1990
(51) Int. Cl.: A61C 5/02

(54) **Instrument canalaire endodontique en titane**
Zahnwurzelkanal-Instrument aus Titan
Endodontic root canal instrument made of titanium

(30) Priorité: 05.06.1989 FR 8907570
(43) Date de publication de la demande: 12.12.1990
(73) Titulaire: MICRO MEGA S.A., F-25000 Besançon (FR)
(72) Inventeur: Seigneurin, Michel, F-70190 Rioz (FR)
(74) Mandataire: Poupon, Michel

(56) Documents cités:
- FR-A- 1 424 534
- GB-A- 2 166 674

## Description

La présente invention a pour objet, à titre de produit industriel nouveau, un instrument canalaire utilisé en endodontie.

Il existe actuellement un bon nombre de type d'instruments canalaires qui diffèrent les uns des autres par la forme de leur lame dont dépend leur mode d'action comme décrit dans le document FR-A-1 424 534. Un certain nombre de ces instruments sont normalisés et de ce fait les fabricants ont peu de liberté d'action dans leur recherche d'amélioration de ces produits.

Notamment un des principaux problèmes à résoudre consiste à combiner à la fois une bonne qualité de coupe durable de ces instruments avec une grande flexibilité qui permette à l'instrument de travailler convenablement dans toutes les formes de canaux dentaires dont on sait que certaines sont particulièrement tortueuses. Hors, il arrive qu'avec les instruments actuels dont les lames sont en général réalisées en acier inoxydable pour les meilleures fabrications le manque de flexibilité conduit à ce que la pointe de l'instrument ne suive pas la géométrie du canal provoquant la réalisation de faux canaux.

Par ailleurs, on sait que dans des mauvaises conditions d'utilisation, un instrument canalaire peut casser dans le canal et dans certains cas il est impossible de l'en sortir, ce qui représente un risque, compte tenu des effets que peut avoir un acier inox prisonnier de l'intérieur d'une racine.

La présente invention a pour but de résoudre les problèmes ci-dessus en fournissant un instrument d'une très grande flexibilité conservant les caractéristiques de coupe des instruments en acier inoxydable ou au carbone et qui de plus de par la biocompatbilité de son matériau réduit considérablement les risques d'infection qui peuvent être provoqués par un fragment restant dans un canal.

Conformément à l'invention, ce résultat est obtenu avec un instrument canalaire utilisé en endodontie, caractérisé en ce que sa lame est réalisée au moins partiellement en titane ou alliage de titane.

Dans le cas d'un alliage de titane, on préférera les compositions où le titane domine.

Un instrument canalaire de ce type présente des capacités de travail remarquables avec une sécurité d'usage extrême.

Il peut être stérilisé sans problèmes.

## Revendications

1. Instrument canalaire utilisé en endodontie, caractérisé en ce que sa lame est réalisée au moins partiellement en titane ou alliage de titane.

2. Instrument canalaire selon la revendication 1, caractérisé en ce que dans le cas d'un alliage de titane, le titane domine.

## Claims

1. A root canal instrument used in endodontics characterised in that its blade is formed at least partially of titanium or titanium alloy

2. A root canal instrument according to Claim 1 , characterised in that in the case of a titanium alloy , the titanium dominates.

## Patentansprüche

1. Zahnwurzelkanal-Instrument, dadurch gekennzeichnet, daß sein Blatt zumindest teilweise aus Titan oder einer Titanlegierung besteht.

2. Zahnwurzelkanal-Instrument nach Anspruch 1, **dadurch gekennzeichnet,** daß im Falle einer Titanlegierung das Titan überwiegt.
